(19)
Europäisches
Patentamt
European
Patent Office
Office européen
des brevets

(11) **EP 3 900 209 B1**

(12) # EUROPEAN PATENT SPECIFICATION

(45) Date of publication and mention
of the grant of the patent:
**24.09.2025 Bulletin 2025/39**

(21) Application number: **19818265.1**

(22) Date of filing: **02.12.2019**

(51) International Patent Classification (IPC):
**H04B 7/0456** (2017.01)      **H04B 7/06** (2006.01)

(52) Cooperative Patent Classification (CPC):
**H04B 7/0482; H04B 7/0456; H04B 7/0478;**
**H04B 7/0617**

(86) International application number:
**PCT/IB2019/060366**

(87) International publication number:
**WO 2020/128694 (25.06.2020 Gazette 2020/26)**

(54) **PRECODER CODEBOOK MODIFICATION BASED ON FAR FIELD RADIATION PATTERN FOR ADVANCED ANTENNA SYSTEMS**

PRECODER-CODEBUCH-MODIFIKATION BASIEREND AUF FERNFELDSTRAHLUNGSMUSTER FÜR FORTGESCHRITTENE ANTENNENSYSTEME

MODIFICATION DE LIVRE DE CODES DE PRÉCODEUR BASÉE SUR UN MOTIF DE RAYONNEMENT DE CHAMP LOINTAIN DES SYSTÈMES D'ANTENNE AVANCÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2018 US 201862780406 P**

(43) Date of publication of application:
**27.10.2021 Bulletin 2021/43**

(73) Proprietor: **Telefonaktiebolaget LM Ericsson (publ)**
**164 83 Stockholm (SE)**

(72) Inventors:
• **MIRZAEE, Alireza**
**Ottawa, Ontario K2T 0A8 (CA)**
• **SOKUN, Hamza**
**Ottawa, Ontario K1S 4H8 (CA)**
• **RASHTCHI, Rozita**
**Kanata, Ontario K2W 0B1 (CA)**

(74) Representative: **Zacco Sweden AB**
**P.O. Box 5581**
**Löjtnantsgatan 21**
**114 85 Stockholm (SE)**

(56) References cited:
**WO-A1-2016/189498      US-A1- 2016 278 103**
**US-A1- 2017 310 376**

• **NVIDIA: "Performance of FD-MIMO codebook enhancements", vol. RAN WG1, no. Belgrade, Serbia; 20150420 - 20150424, 19 April 2015 (2015-04-19), XP050934614, Retrieved from the Internet <URL:http://www.3gpp.org/ftp/ Meetings_3GPP_SYNC/RAN1/Docs/> [retrieved on 20150419]**

**EP 3 900 209 B1**

## Description

### TECHNICAL FIELD

The present application relates generally to precoder codebook modifications based on far field radiation patterns, and more specifically to precoder codebook modifications based on far field radiation patterns of advanced antenna systems.

### BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

To obtain a radiation pattern of a precoder, an array far-field is used. The array far-field (FF) is calculated using both array factor (AF), i.e., array contribution, and element factor (EF), i.e., element contribution. Moreover, the element factor of the array depends on the subarray far-field. More specifically, the following steps may be followed to calculate the array far-field:

(Sub-array of Dual Polarized Antenna Elements)

Step-1: Calculate EF (radiation pattern per element), for a subarray;
Step-2: Calculate AF for the subarray;

Step-2.1: Calculate the steering vector for the subarray,
Step-2.2: Calculate excitations (based on any desired tilt),

Step-3: Use AF and EF to generate an array FF for the subarray;

(Array of Sub-arrays)

Step-4: Calculate EF for the array, which assumed to be equal to the calculated FF for the sub-array;
Step-5: Calculate AF for the array;

Step-5.1: Calculate the steering vector for the array,
Step-5.2: Calculate excitations for the array,

Step-6: Calculate FF for the array; and
Step-7: Calculate directivity (and antenna gain), which can be expressed as $FF_{array} = EF_{array} \times AF_{array}$, where $EF_{array} = FF_{subarray}$, and $FF_{subarray} = EF_{subarray} \times AF_{subarray}$.

An example of this calculation in advanced antenna systems (AAS) antennas is illustrated. In this example, the selected beam will be shaped by the radiation pattern of the antenna. The far-field radiation pattern of an array of N antenna consists of the following factors:

$$FF_{array} = EF_{sub-array} \times AF_{sub-array} \times AF_{array}$$

The first item is the element factor (EF) which is the radiation pattern of a single element. It is a common practice to have dual polarized antenna elements. In this case, the radiation pattern at angle $\phi \in [0, \pi]$ will be

$$EF_{sub-array}(\phi) = A_{max} - min\left(12\left(\frac{\phi}{\phi_{3dB}}\right)^2, fbr\right)$$

where $A_{max}$ is the Maximum Antenna Gain, $\phi_{3dB}$ is the Half Power Beam width and *fbr* is the Front to Back Ratio.

The second item is the array factor of sub-array. Again, it is very common to connect two or more elements together to create a sub-array antenna. In this example, it is assumed that a sub-array connects S number of elements together with $d_s$ spacing between elements and $\lambda$ is the wavelength. The sub-array factor is

$$\mathrm{AF}_{sub-array}(\phi) = \sum_{s=0}^{S-1} w_s e^{j\frac{2\pi s d_s \sin(\phi)}{\lambda}}$$ , where $w_s$ is the excitation weight based on the desired tilt.

The third item is the array factor of the antenna. Given an array of N antennas, with $d_n = S \times d_s$ spacing between antennas, the array factor is given by: $AF_{array}(\phi) = \sum_{n=0}^{N-1} w_n e^{j\frac{2\pi n d_n \sin(\phi)}{\lambda}}$ where $w_n$ is the excitation weight based on the DFT-beam chosen.

When a 1D Grid of Beams (GoB) situation is utilized, there is a set of predefined Discrete Fourier transform (DFT) beams:

$$w(k) = \frac{1}{\sqrt{N}}\begin{bmatrix} e^{j2\pi\cdot 0\cdot\frac{k}{QN}} \\ e^{j2\pi\cdot 1\cdot\frac{k}{QN}} \\ \vdots \\ e^{j2\pi\cdot(N-1)\cdot\frac{k}{QN}} \end{bmatrix}$$

where $k = 0,1, ... QN - 1$ is the precoder index, *N* is the number of antennas and *Q* is an integer oversampling factor. Based on uplink measurements e.g., uplink DMRS, the GoB algorithm will find the beam that has the highest beam power:

$$w_v = arg\, max_k\, w^H(k)R_v w(k)$$

where $R_v$ is the one-dimensional covariance of the uplink channel, estimated at the eNB/gNB and $(.)^H$ indicates the Hermitian. The selected beam then will be used for beamforming.

There currently exist certain challenges. Most of the reciprocity-assisted codebook-based beamforming algorithms (e.g., DMRS-based GoB algorithm) select their best beams by only considering maximization of received power without having any constraint on interference. However, such selection might deteriorate overall cell throughput due to the intolerable amount of the interference created to other cells. For instance, in GoB algorithms the codebooks consist of DFT beams, and in reciprocity solutions, the DFT beam that yields the highest received power in uplink (UL) will be used for downlink (DL) beamforming. However, given the structure of the antenna array, some of these DFT beams result in larger sidelobes (or grating lobes), viz., excessive interference, so they are not suitable for DL beamforming, and hence, they must be restricted from the set of the codebook to improve overall system throughput.

WO 2016/189498 A1 discloses systems and methods for providing location-based codebook subset restriction in such a manner as to mitigate co-channel interference from a macro base station to User Equipment devices (UEs) in a cell range expansion zone of a Low Power Node (LPN) within a coverage area of the macro base station. In this manner, performance of the UEs in the cell range expansion zone is improved.

Document Nvidia: "Performance of FD-MIMO codebook enhancements", 3GPP draft, R1-151753, studies performance benefits of codebook enhancements for EBF/FD-MIMO according to a Kronecker product based codebook, where the final precoder is obtained as a Kronecker product of a horizontal precoder and a vertical precoder.

US 2017/310376 A1 discloses a method of operating a transmitter arrangement for a wireless communication network, the transmitter arrangement adapted for beamforming. The method comprises determining a maximum power level mask for the power of transmission and/or beams in a critical angular interval, the maximum power level mask covering at least the critical angular interval and controlling beamforming based on the maximum power level mask.

## SUMMARY

According to the present disclosure, a method, a radio node, a system and a computer readable medium according to the independent claims are provided. Developments are set forth in the dependent claims.

Some aspects herein perform a method by a radio node for downlink precoder codebook modification, where the precoder codebook has a plurality of beamformers. The method includes determining a radiation pattern for each beamformer of the plurality of beamformers, determining whether the determined radiation pattern for each beamformer of the plurality of beamformers satisfies a design criterion; and excluding from the codebook the beamformers from the plurality of beamformers that have radiation patterns that are determined to satisfy the design criterion.

In some aspects, the radiation pattern for each of the plurality of beamformers includes a main lobe and at least two sidelobes. In these aspects, the design criterion may include the level of interference caused to neighboring cells by the at least two sidelobes and/or the ratio of the gain by the at least two sidelobes to the gain of the main lobe, such as at least eighty percent (80%).

In some aspects, the determining of the radiation patterns may be performed by array far-field analysis.

Some aspects herein provide a radio node including one or more processors and memory storing instructions that, when executed, by the one or more processors cause the system to perform any of the aspects of the method of the present invention.

Some aspects herein provide a system including one or more processors and memory storing instructions that, when executed, by the one or more processors cause the system to perform any of the aspects of the method of the present invention.

Some aspects herein provide a non-transitory computer readable medium including instructions that, when executed, cause one or more processors to perform any of the aspects of the method of the present invention.

Some aspects herein provide a method by a radio node for precoder codebook modification in an uplink scenario, where the precoder codebook has a plurality of beamformers.

## BRIEF DESCRIPTION OF THE DRAWINGS

Figure 1 illustrates a block diagram of a precoder codebook system according to some embodiments of the present disclosure.

Figure 2 illustrates an exemplary radiation pattern for a single sub-array pattern according to some embodiments of the present invention.

Figure 3 illustrates an exemplary radiation pattern for a common beam according to some embodiments of the present invention.

Figure 4 illustrates an exemplary radiation pattern for a first beam according to some embodiments of the present invention.

Figure 5 illustrates an exemplary radiation pattern for a second beam according to some embodiments of the present invention.

Figure 6 illustrates an exemplary radiation pattern for a third beam according to some embodiments of the present invention.

Figure 7 illustrates an exemplary radiation pattern for a fourth beam according to some embodiments of the present invention.

Figure 8 illustrates an exemplary radiation pattern for a fifth beam according to some embodiments of the present invention.

Figure 9 illustrates an exemplary radiation pattern for a sixth beam according to some embodiments of the present invention.

Figure 10 illustrates an exemplary radiation pattern for a seventh beam according to some embodiments of the present invention.

Figure 11 illustrates an exemplary radiation pattern for an eighth beam according to some embodiments of the present invention.

Figure 12 illustrates the performance of a precoder codebook system according to some embodiments of the present disclosure.

Figure 13 illustrates the impact of a truncation solution in terms of cell throughput of a precoder codebook system according to some embodiments of the present disclosure.

Figure 14 illustrates the impact of a truncation solution in terms of SINR of a precoder codebook system according to some embodiments of the present disclosure.

Figure 15 is a block diagram of a wireless network in accordance with some embodiments.

Figure. 16 is a block diagram of a user equipment according to some embodiments.

Figure. 17 is a block diagram of a virtualization environment according to some embodiments.

Figure. 18 is a block diagram of a communication network with a host computer according to some embodiments.

Figure 19 is a block diagram of a host computer communicating via a base station with a user equipment over a partially wireless connection in accordance with some embodiments.

Figure 20 is a flowchart illustrating a method implemented in a communication system including a host computer, a base station and a user equipment in accordance with some embodiments.

Figure 21 is a flowchart illustrating a method implemented in a communication system including a host computer, a base station and a user equipment in accordance with some embodiments.

Figure 22 is a flowchart illustrating a method implemented in a communication system including a host computer, a base station and a user equipment in accordance with some embodiments.

Figure 23 is a flowchart illustrating a method implemented in a communication system including a host computer, a base station and a user equipment in accordance with some embodiments.

Figure 24 is a flowchart of a method in accordance with some embodiments.

Figure 25 is a block diagram of a virtualization apparatus in accordance with some embodiments.

## DETAILED DESCRIPTION

Some of the embodiments contemplated herein may provide solutions to the above set out, or other, challenges. will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

The radiation pattern of a precoder impacts not only the antenna gain achieved at a location, but also, interference caused to other cells. Hence, cell throughput can be seriously affected by the radiation pattern of the considered precoder.

In general, the embodiments are directed toward methods and systems that truncate the original codebook based on observing radiation patterns of precoders, i.e., excluding some of precoders from the codebook.

In certain embodiments, when a beam, otherwise referred to as a beamformer, has larger sidelobes than its main lobe, these embodiments do not include such beam into codebook in order to reduce interference in network, and to achieve higher cell throughput.

Certain embodiments may provide one or more of the following technical advantage(s): applying the disclosed methods and systems to any reciprocity-assisted codebook-based beamforming system, which does not bring any additional complexity as the precoder codebook modification may be done performed offline, and the restricted set may be then used in the online calculations.

Certain embodiments improve the performance in terms of cell throughput against the one in which the codebook is not truncated. For instance, considering the far field effect of the antenna array, the set of DFT codebook in GoB system might be restricted. In such case, the beams that creates high sidelobes may be eliminated from the set. The design criterion for elimination might be that if sidelobe gain is higher than a percentage of the main lobe (e.g., %80).

Certain embodiments described herein are directed to downlink precoder codebook modification. This is not limiting as certain additional embodiments may be directed to precoder codebook modification in an uplink scenario.

Referring now also to Figures, other aspects of the disclosure and embodiments of these aspects are discussed.

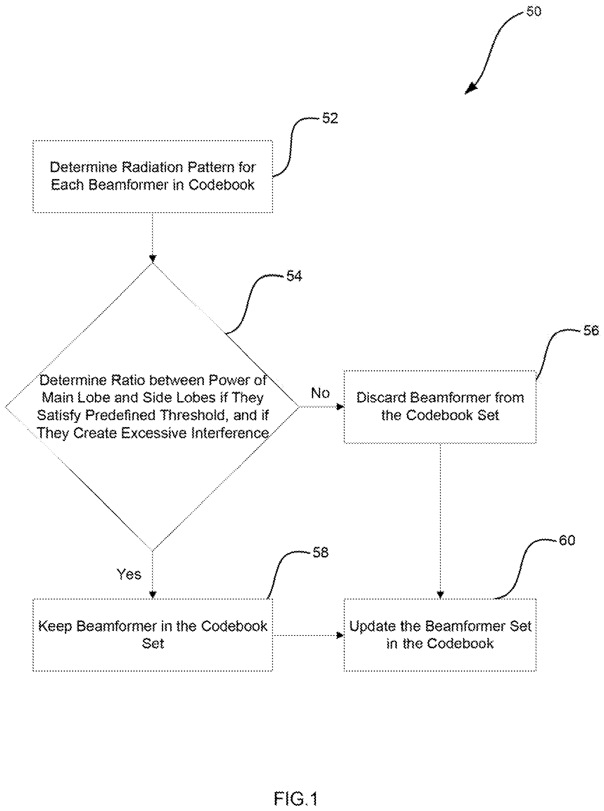

Figure 1 illustrates an embodiment 50 of a method to enhance cell throughput in an AAS system without incurring additional cost. This embodiment 50 comprises, at step 52, finding a radiation pattern for each beamformer in codebook. At step 54, the ratio between the power of a main lobe and any side lobes is evaluated to determine if the ratio satisfies a predefined threshold, and also to determine if any of the side lobes create excessive interference to any neighbouring cells.

At step 56, in the event, for a specific beamformer, that ratio does not satisfy the predefined threshold and/or if any of the side lobes create excessive interference to any neighbouring cells, this beamformer is discarded from the codebook set.

At step 58, in the event, for a specific beamformer, that ratio does satisfy the predefined threshold and/or none of the side lobes create excessive interference to any neighbouring cells, this beamformer is kept within the codebook set. At step 60, the beamformer set in the codebook is updated.

In this embodiment, the ratio between the power of a main lobe and any side lobes and the excessive interference are considered to be predetermined design criterion to use in determining if a specific beam is to be discarded or kept within a codebook. This is illustrative and not meant to be limiting. Other design criterion may be utilized for such determination. In these embodiments, radiation patterns are obtained for different beams, and then, those beams that satisfy the design criterion are discarded, or truncated, from the codebook.

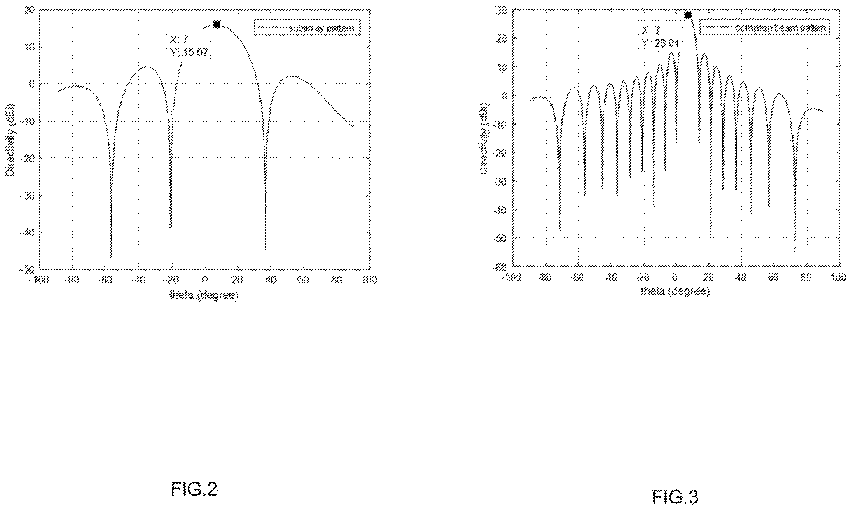

By way of example, an array of 4 subarrays spaced apart 2.1λ, each having 3 sub-elements. Based on this given antenna configurations, the following radiation patterns can be obtained, see Figures 2-11.

The radiation pattern for a single sub-array pattern is shown in Figure 2. Noting that each sub-array consists of 3 sub-elements spaced apart 0.7λ, and the desired tilt was set to 7 degree. The radiation pattern for the common beam is shown in Figure 3.

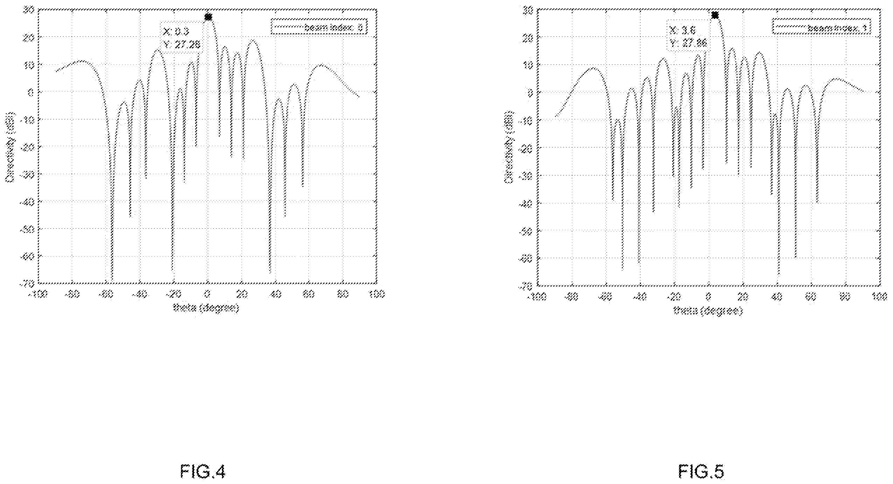

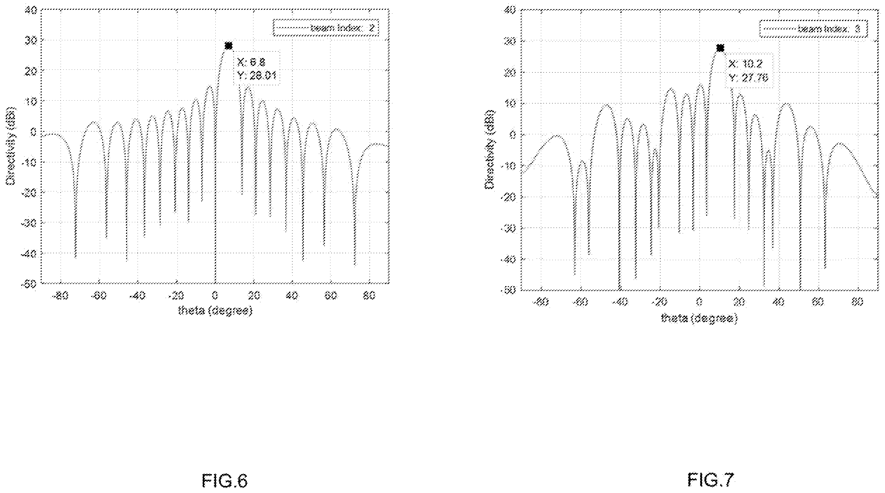

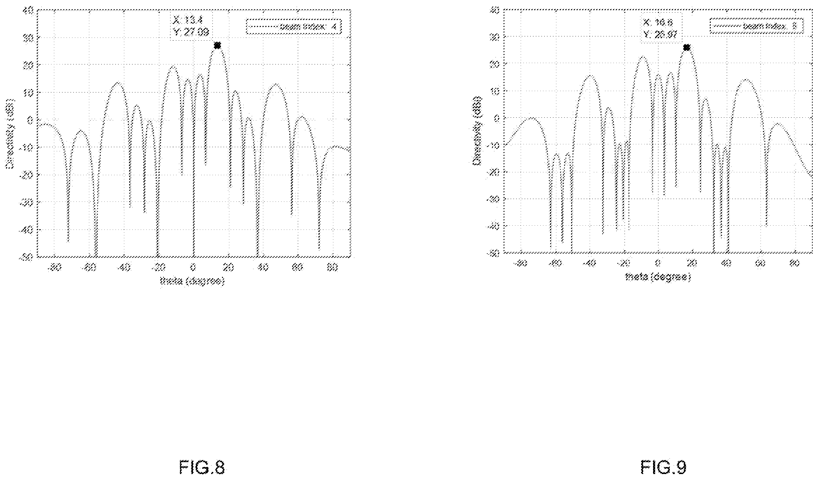

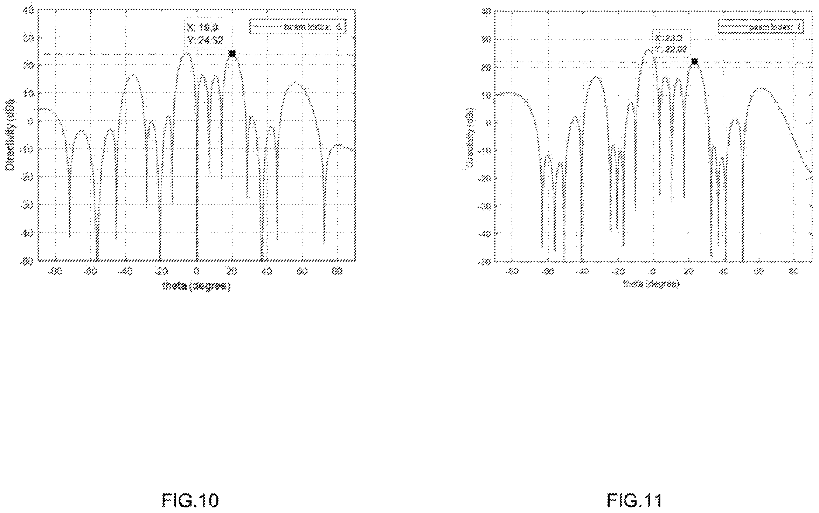

In this example, the oversampled DFT-beams have an oversampling rate of 2. Accordingly, there will be eight beams in the codebook, each with different tilt angle and radiation pattern. The radiation patterns for each of these beams are provided as follows: Figure 4 illustrates the first beam. Figure 5 illustrates the second beam. Figure 6 illustrates the third beam. Figure 7 illustrates the fourth beam. Figure 8 illustrates the fifth beam. Figure 9 illustrates the sixth beam. Figure 10 illustrates the seventh beam. Figure 11 illustrates the eighth beam.

As it can be seen from these Figures, the seventh and eighth DFT-beams (Figures 10 and 11) have strong side lobes, particularly, larger than the main lobes. If these beams were to be chosen for transmission, excessive interference will be created to other users in neighboring cells, and hence, may decrease overall cell throughput. Accordingly, the seventh and eighth beams would be eliminated from the GoB codebook set. The GoB algorithm would then decide on which of the remaining beams, i.e. those that do not have large side lobes, to utilize.

In some situations, a Hybrid Transmission is utilized. In general, a Hybrid Transmission allow a base station to determine the best beam in both horizontal direction and vertical direction. In these situations, some embodiments of present invention allow for a codebook that is utilized with a Hybrid Transmission to be updated by the truncation of the number of beams from the utilized codebook.

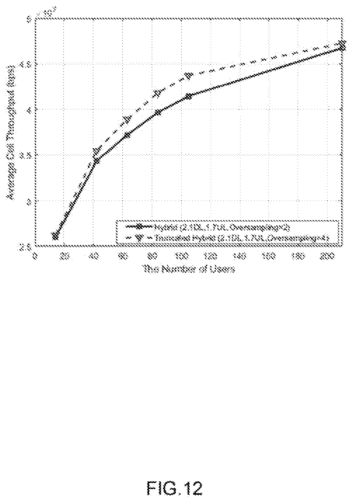

By way of example, the following setup is considered: antenna: FDD AAS with 4X4X2 subarrays, common channel fix tilt: 6 degree down tilt, channel: 5G SCM-Urban Macro, cell Deployment: 7 eNBs, 3 sectors, multipath speed (fading): DL slow speed (0.8333 m/sec), traffic: Full buffer, Carrier Frequency: Downlink = 2.1E9, Uplink = 1.7E9, Figure 12 illustrates the performance, average cell throughput by number of users, for both a legacy hybrid transmission and a truncated hybrid transmission utilizing embodiments of the present invention. As can be seen, the performance of the truncated hybrid transmission is better than the performance of the legacy hybrid transmission.

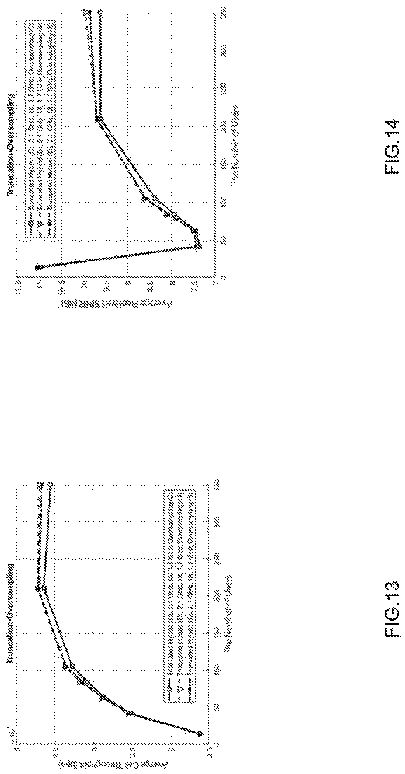

Moreover, Figures 13 and 14 illustrate the impact of these embodiments in terms of cell throughput, and SINR when the codebook set for GoB has different number of beams is investigated. Noting that the number of beams is changing depending on the oversampling rate considered. For instance, the number of beams in the codebook is 8, 16, and 32 for oversampling rate of 2, 4, and 8, respectively.

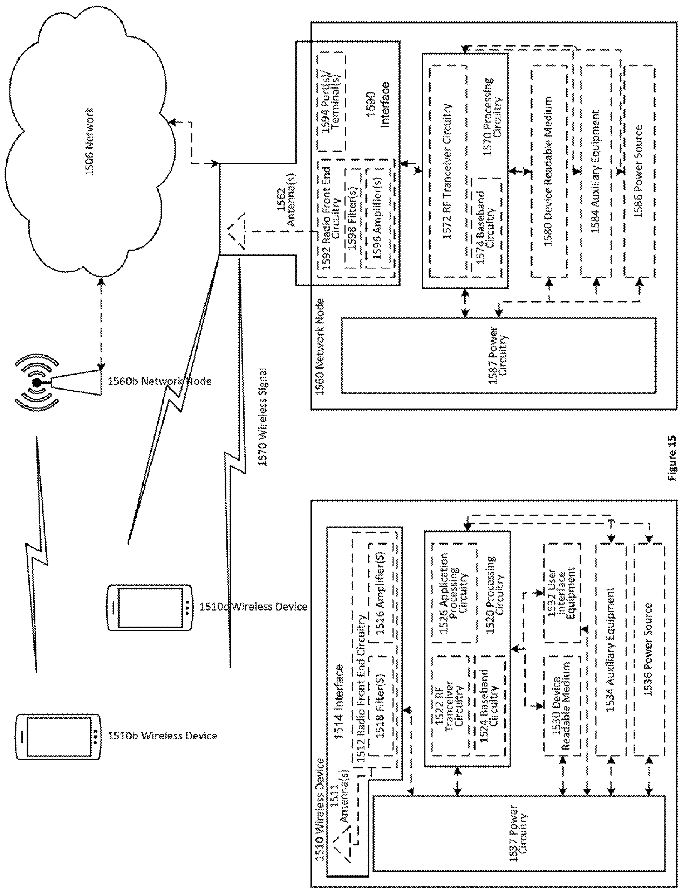

Although the subject matter described herein may be implemented in any appropriate type of system using any suitable components, the embodiments disclosed herein are described in relation to a wireless network, such as the example wireless network illustrated in Figure 15. For simplicity, the wireless network of Figure 15 only depicts network 1506, network nodes 1560 and 1560b, and WDs 1510, 1510b, and 1510c. In practice, a wireless network may further include any additional elements suitable to support communication between wireless devices or between a wireless device and another communication device, such as a landline telephone, a service provider, or any other network node or end device. Of the illustrated components, network node 1560 and wireless device (WD) 1510 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1506 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1560 and WD 1510 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 15, network node 1560 includes processing circuitry 1570, device readable medium 1580, interface 1590, auxiliary equipment 1584, power source 1586, power circuitry 1587, and antenna 1562. Although network node 1560 illustrated in the example wireless network of Figure 15 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1560 are depicted as single boxes located within a larger box, or nested within multiple boxes, in practice, a network node may comprise multiple different physical components that make up a single illustrated component (e.g., device readable medium 1580 may comprise multiple separate hard drives as well as multiple RAM modules).

Similarly, network node 1560 may be composed of multiple physically separate components (e.g., a NodeB component and a RNC component, or a BTS component and a BSC component, etc.), which may each have their own respective components. In certain scenarios in which network node 1560 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1560 may be configured to support multiple radio access technologies (RATs). In such embodiments, some components may be duplicated (e.g., separate device readable medium 1580 for the different RATs) and some components may be reused (e.g., the same antenna 1562 may be shared by the RATs). Network node 1560 may also include multiple sets of the various illustrated components for different wireless technologies integrated into network node 1560, such as, for example, GSM, WCDMA, LTE, NR, WiFi, or Bluetooth wireless technologies. These wireless technologies may be integrated into the same or different chip or set of chips and other components within network node 1560.

Processing circuitry 1570 is configured to perform any determining, calculating, or similar operations (e.g., certain obtaining operations) described herein as being provided by a network node. These operations performed by processing circuitry 1570 may include processing information obtained by processing circuitry 1570 by, for example, converting the obtained information into other information, comparing the obtained information or converted information to information stored in the network node, and/or performing one or more operations based on the obtained information or converted information, and as a result of said processing making a determination.

Processing circuitry 1570 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1560 components, such as device readable medium 1580, network node 1560 functionality. For example, processing circuitry 1570 may execute instructions stored in device readable medium 1580 or in memory within processing circuitry 1570. Such functionality may include providing any of the various wireless features, functions, or benefits discussed herein. In some embodiments, processing circuitry 1570 may include a system on a chip (SOC).

In some embodiments, processing circuitry 1570 may include one or more of radio frequency (RF) transceiver circuitry 1572 and baseband processing circuitry 1574. In some embodiments, radio frequency (RF) transceiver circuitry 1572 and baseband processing circuitry 1574 may be on separate chips (or sets of chips), boards, or units, such as radio units and digital units. In alternative embodiments, part or all of RF transceiver circuitry 1572 and baseband processing circuitry 1574 may be on the same chip or set of chips, boards, or units.

In certain embodiments, some or all of the functionality described herein as being provided by a network node, base station, eNB or other such network device may be performed by processing circuitry 1570 executing instructions stored on device readable medium 1580 or memory within processing circuitry 1570. In alternative embodiments, some or all of the functionality may be provided by processing circuitry 1570 without executing instructions stored on a separate or discrete device readable medium, such as in a hard-wired manner. In any of those embodiments, whether executing instructions stored on a device readable storage medium or not, processing circuitry 1570 can be configured to perform the described functionality. The benefits provided by such functionality are not limited to processing circuitry 1570 alone or to other components of network node 1560, but are enjoyed by network node 1560 as a whole, and/or by end users and the wireless network generally.

Device readable medium 1580 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1570. Device readable medium 1580 may store any suitable instructions, data or information, including a computer program, software, an application including one or more of logic, rules, code, tables, etc. and/or other instructions capable of being executed by processing circuitry 1570 and, utilized by network node 1560. Device readable medium 1580 may be used to store any calculations made by processing circuitry 1570 and/or any data received via interface 1590. In some embodiments, processing circuitry 1570 and device readable medium 1580 may be considered to be integrated.

Interface 1590 is used in the wired or wireless communication of signalling and/or data between network node 1560, network 1506, and/or WDs 1510. As illustrated, interface 1590 comprises port(s)/terminal(s) 1594 to send and receive data, for example to and from network 1506 over a wired connection. Interface 1590 also includes radio front end circuitry 1592 that may be coupled to, or in certain embodiments a part of, antenna 1562. Radio front end circuitry 1592 comprises filters 1598 and amplifiers 1596. Radio front end circuitry 1592 may be connected to antenna 1562 and processing circuitry 1570. Radio front end circuitry may be configured to condition signals communicated between antenna 1562 and processing circuitry 1570. Radio front end circuitry 1592 may receive digital data that is to be sent out to other network nodes or WDs via a wireless connection. Radio front end circuitry 1592 may convert the digital data into a radio signal having the appropriate channel and bandwidth parameters using a combination of filters 1598 and/or amplifiers 1596. The radio signal may then be transmitted via antenna 1562. Similarly, when receiving data, antenna 1562 may collect radio signals which are then converted into digital data by radio front end circuitry 1592. The digital data may be passed to processing circuitry 1570. In other embodiments, the interface may comprise different components and/or different combinations of components.

In certain alternative embodiments, network node 1560 may not include separate radio front end circuitry 1592, instead, processing circuitry 1570 may comprise radio front end circuitry and may be connected to antenna 1562 without separate radio front end circuitry 1592. Similarly, in some embodiments, all or some of RF transceiver circuitry 1572 may be considered a part of interface 1590. In still other embodiments, interface 1590 may include one or more ports or terminals 1594, radio front end circuitry 1592, and RF transceiver circuitry 1572, as part of a radio unit (not shown), and interface 1590 may communicate with baseband processing circuitry 1574, which is part of a digital unit (not shown).

Antenna 1562 may include one or more antennas, or antenna arrays, configured to send and/or receive wireless signals. Antenna 1562 may be coupled to radio front end circuitry 1590 and may be any type of antenna capable of transmitting and receiving data and/or signals wirelessly. In some embodiments, antenna 1562 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1562 may be separate from network node 1560 and may be connectable to network node 1560 through an interface or port.

Antenna 1562, interface 1590, and/or processing circuitry 1570 may be configured to perform any receiving operations and/or certain obtaining operations described herein as being performed by a network node. Any information, data and/or signals may be received from a wireless device, another network node and/or any other network equipment. Similarly, antenna 1562, interface 1590, and/or processing circuitry 1570 may be configured to perform any transmitting operations described herein as being performed by a network node. Any information, data and/or signals may be transmitted to a wireless device, another network node and/or any other network equipment.

Power circuitry 1587 may comprise, or be coupled to, power management circuitry and is configured to supply the components of network node 1560 with power for performing the functionality described herein. Power circuitry 1587 may receive power from power source 1586. Power source 1586 and/or power circuitry 1587 may be configured to provide power to the various components of network node 1560 in a form suitable for the respective components (e.g., at a voltage and current level needed for each respective component). Power source 1586 may either be included in, or external to, power circuitry 1587 and/or network node 1560. For example, network node 1560 may be connectable to an external power source (e.g., an electricity outlet) via an input circuitry or interface such as an electrical cable, whereby the external power source supplies power to power circuitry 1587. As a further example, power source 1586 may comprise a source of power in the form of a battery or battery pack which is connected to, or integrated in, power circuitry 1587. The battery may provide backup power should the external power source fail. Other types of power sources, such as photovoltaic devices, may also be used.

Alternative embodiments of network node 1560 may include additional components beyond those shown in Figure 15 that may be responsible for providing certain aspects of the network node's functionality, including any of the functionality described herein and/or any functionality necessary to support the subject matter described herein. For example, network node 1560 may include user interface equipment to allow input of information into network node 1560 and to allow output of information from network node 1560. This may allow a user to perform diagnostic, maintenance, repair, and other administrative functions for network node 1560.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1510 includes antenna 1511, interface 1514, processing circuitry 1520, device readable medium 1530, user interface equipment 1532, auxiliary equipment 1534, power source 1536 and power circuitry 1537. WD 1510 may include multiple sets of one or more of the illustrated components for different wireless technologies supported by WD 1510, such as, for example, GSM, WCDMA, LTE, NR, WiFi, WiMAX, or Bluetooth wireless technologies, just to mention a few. These wireless technologies may be integrated into the same or different chips or set of chips as other components within WD 1510.

Antenna 1511 may include one or more antennas or antenna arrays, configured to send and/or receive wireless signals, and is connected to interface 1514. In certain alternative embodiments, antenna 1511 may be separate from WD 1510 and be connectable to WD 1510 through an interface or port. Antenna 1511, interface 1514, and/or processing circuitry 1520 may be configured to perform any receiving or transmitting operations described herein as being performed by a WD. Any information, data and/or signals may be received from a network node and/or another WD. In some embodiments, radio front end circuitry and/or antenna 1511 may be considered an interface.

As illustrated, interface 1514 comprises radio front end circuitry 1512 and antenna 1511. Radio front end circuitry 1512 comprise one or more filters 1518 and amplifiers 1516. Radio front end circuitry 1514 is connected to antenna 1511 and processing circuitry 1520, and is configured to condition signals communicated between antenna 1511 and processing circuitry 1520. Radio front end circuitry 1512 may be coupled to or a part of antenna 1511. In some embodiments, WD 1510 may not include separate radio front end circuitry 1512; rather, processing circuitry 1520 may comprise radio front end circuitry and may be connected to antenna 1511. Similarly, in some embodiments, some or all of RF transceiver circuitry 1522 may be considered a part of interface 1514. Radio front end circuitry 1512 may receive digital data that is to be sent out to other network nodes or WDs via a wireless connection. Radio front end circuitry 1512 may convert the digital data into a radio signal having the appropriate channel and bandwidth parameters using a combination of filters 1518 and/or amplifiers 1516. The radio signal may then be transmitted via antenna 1511. Similarly, when receiving data, antenna 1511 may collect radio signals which are then converted into digital data by radio front end circuitry 1512. The digital data may be passed to processing circuitry 1520. In other embodiments, the interface may comprise different components and/or different combinations of components.

Processing circuitry 1520 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1510 components, such as device readable medium 1530, WD 1510 functionality. Such functionality may include providing any of the various wireless features or benefits discussed herein. For example, processing circuitry 1520 may execute instructions stored in device readable medium 1530 or in memory within processing circuitry 1520 to provide the functionality disclosed herein.

As illustrated, processing circuitry 1520 includes one or more of RF transceiver circuitry 1522, baseband processing circuitry 1524, and application processing circuitry 1526. In other embodiments, the processing circuitry may comprise different components and/or different combinations of components. In certain embodiments processing circuitry 1520 of WD 1510 may comprise a SOC. In some embodiments, RF transceiver circuitry 1522, baseband processing circuitry 1524, and application processing circuitry 1526 may be on separate chips or sets of chips. In alternative embodiments, part or all of baseband processing circuitry 1524 and application processing circuitry 1526 may be combined into one chip or set of chips, and RF transceiver circuitry 1522 may be on a separate chip or set of chips. In still alternative embodiments, part or all of RF transceiver circuitry 1522 and baseband processing circuitry 1524 may be on the same chip or set of chips, and application processing circuitry 1526 may be on a separate chip or set of chips. In yet other alternative embodiments, part or all of RF transceiver circuitry 1522, baseband processing circuitry 1524, and application processing circuitry 1526 may be combined in the same chip or set of chips. In some embodiments, RF transceiver circuitry 1522 may be a part of interface 1514. RF transceiver circuitry 1522 may condition RF signals for processing circuitry 1520.

In certain embodiments, some or all of the functionality described herein as being performed by a WD may be provided by processing circuitry 1520 executing instructions stored on device readable medium 1530, which in certain embodiments may be a computer-readable storage medium. In alternative embodiments, some or all of the functionality may be provided by processing circuitry 1520 without executing instructions stored on a separate or discrete device readable storage medium, such as in a hard-wired manner. In any of those particular embodiments, whether executing instructions stored on a device readable storage medium or not, processing circuitry 1520 can be configured to perform the described functionality. The benefits provided by such functionality are not limited to processing circuitry 1520 alone or to other components of WD 1510, but are enjoyed by WD 1510 as a whole, and/or by end users and the wireless network generally.

Processing circuitry 1520 may be configured to perform any determining, calculating, or similar operations (e.g., certain obtaining operations) described herein as being performed by a WD. These operations, as performed by processing circuitry 1520, may include processing information obtained by processing circuitry 1520 by, for example, converting the obtained information into other information, comparing the obtained information or converted information to information stored by WD 1510, and/or performing one or more operations based on the obtained information or converted information, and as a result of said processing making a determination.

Device readable medium 1530 may be operable to store a computer program, software, an application including one or more of logic, rules, code, tables, etc. and/or other instructions capable of being executed by processing circuitry 1520. Device readable medium 1530 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1520. In some embodiments, processing circuitry 1520 and device readable medium 1530 may be considered to be integrated.

User interface equipment 1532 may provide components that allow for a human user to interact with WD 1510. Such interaction may be of many forms, such as visual, audial, tactile, etc. User interface equipment 1532 may be operable to produce output to the user and to allow the user to provide input to WD 1510. The type of interaction may vary depending on the type of user interface equipment 1532 installed in WD 1510. For example, if WD 1510 is a smart phone, the interaction may be via a touch screen; if WD 1510 is a smart meter, the interaction may be through a screen that provides usage (e.g., the number of gallons used) or a speaker that provides an audible alert (e.g., if smoke is detected). User interface equipment 1532 may include input interfaces, devices and circuits, and output interfaces, devices and circuits. User interface equipment 1532 is configured to allow input of information into WD 1510, and is connected to processing circuitry 1520 to allow processing circuitry 1520 to process the input information. User interface equipment 1532 may include, for example, a microphone, a proximity or other sensor, keys/buttons, a touch display, one or more cameras, a USB port, or other input circuitry. User interface equipment 1532 is also configured to allow output of information from WD 1510, and to allow processing circuitry 1520 to output information from WD 1510. User interface equipment 1532 may include, for example, a speaker, a display, vibrating circuitry, a USB port, a headphone interface, or other output circuitry. Using one or more input and output interfaces, devices, and circuits, of user interface equipment 1532, WD 1510 may communicate with end users and/or the wireless network, and allow them to benefit from the functionality described herein.

Auxiliary equipment 1534 is operable to provide more specific functionality which may not be generally performed by WDs. This may comprise specialized sensors for doing measurements for various purposes, interfaces for additional types of communication such as wired communications etc. The inclusion and type of components of auxiliary equipment 1534 may vary depending on the embodiment and/or scenario.

Power source 1536 may, in some embodiments, be in the form of a battery or battery pack. Other types of power sources, such as an external power source (e.g., an electricity outlet), photovoltaic devices or power cells, may also be used. WD 1510 may further comprise power circuitry 1537 for delivering power from power source 1536 to the various parts of WD 1510 which need power from power source 1536 to carry out any functionality described or indicated herein. Power circuitry 1537 may in certain embodiments comprise power management circuitry. Power circuitry 1537 may additionally or alternatively be operable to receive power from an external power source; in which case WD 1510 may be connectable to the external power source (such as an electricity outlet) via input circuitry or an interface such as an electrical power cable. Power circuitry 1537 may also in certain embodiments be operable to deliver power from an external power source to power source 1536. This may be, for example, for the charging of power source 1536. Power circuitry 1537 may perform any formatting, converting, or other modification to the power from power source 1536 to make the power suitable for the respective components of WD 1510 to which power is supplied.

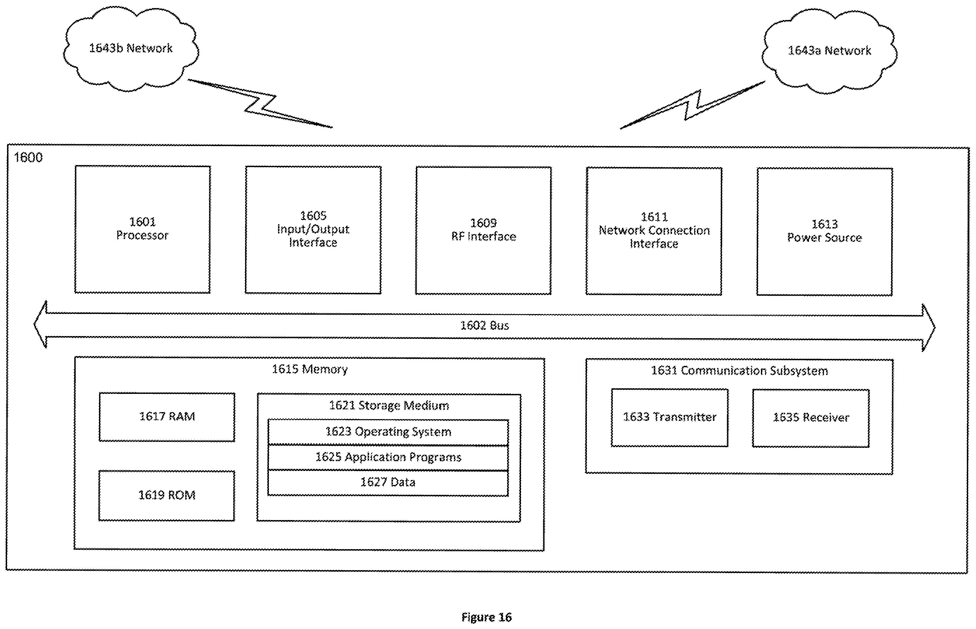

Figure 16 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 1600 may be any UE identified by the 3$^{rd}$ Generation Partnership Project (3GPP), including a NB-IoT UE, a machine type communication (MTC) UE, and/or an enhanced MTC (eMTC) UE. UE 1600, as illustrated in Figure 16, is one example of a WD configured for communication in accordance with one or more communication standards promulgated by the 3$^{rd}$ Generation Partnership Project (3GPP), such as 3GPP's GSM, UMTS, LTE, and/or 5G standards. As mentioned previously, the term WD and UE may be used interchangeable. Accordingly, although Figure 16 is a UE, the components discussed herein are equally applicable to a WD, and vice-versa.

In Figure 16, UE 1600 includes processing circuitry 1601 that is operatively coupled to input/output interface 1605, radio frequency (RF) interface 1609, network connection interface 1611, memory 1615 including random access memory (RAM) 1617, read-only memory (ROM) 1619, and storage medium 1621 or the like, communication subsystem 1631, power source 1633, and/or any other component, or any combination thereof. Storage medium 1621 includes operating system 1623, application program 1625, and data 1627. In other embodiments, storage medium 1621 may include other similar types of information. Certain UEs may utilize all of the components shown in Figure 16, or only a subset of the components. The level of integration between the components may vary from one UE to another UE. Further, certain UEs may contain multiple instances of a component, such as multiple processors, memories, transceivers, transmitters, receivers, etc.

In Figure 16, processing circuitry 1601 may be configured to process computer instructions and data. Processing circuitry 1601 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1601 may include two central processing units (CPUs). Data may be information in a form suitable for use by a computer.

In the depicted embodiment, input/output interface 1605 may be configured to provide a communication interface to an input device, output device, or input and output device. UE 1600 may be configured to use an output device via input/output interface 1605. An output device may use the same type of interface port as an input device. For example, a USB port may be used to provide input to and output from UE 1600. The output device may be a speaker, a sound card, a video card, a display, a monitor, a printer, an actuator, an emitter, a smartcard, another output device, or any combination thereof. UE 1600 may be configured to use an input device via input/output interface 1605 to allow a user to capture information into UE 1600. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 16, RF interface 1609 may be configured to provide a communication interface to RF components such as a transmitter, a receiver, and an antenna. Network connection interface 1611 may be configured to provide a communication interface to network 1643a. Network 1643a may encompass wired and/or wireless networks such as a local-area network (LAN), a wide-area network (WAN), a computer network, a wireless network, a telecommunications network, another like network or any combination thereof. For example, network 1643a may comprise a Wi-Fi network. Network connection interface 1611 may be configured to include a receiver and a transmitter interface used to communicate with one or more other devices over a communication network according to one or more communication protocols, such as Ethernet, TCP/IP, SONET, ATM, or the like. Network connection interface 1611 may implement receiver and transmitter functionality appropriate to the communication network links (e.g., optical, electrical, and the like). The transmitter and receiver functions may share circuit components, software or firmware, or alternatively may be implemented separately.

RAM 1617 may be configured to interface via bus 1602 to processing circuitry 1601 to provide storage or caching of data or computer instructions during the execution of software programs such as the operating system, application programs, and device drivers. ROM 1619 may be configured to provide computer instructions or data to processing circuitry 1601. For example, ROM 1619 may be configured to store invariant low-level system code or data for basic system functions such as basic input and output (I/O), startup, or reception of keystrokes from a keyboard that are stored in a non-volatile memory. Storage medium 1621 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1621 may be configured to include operating system 1623, application program 1625 such as a web browser application, a widget or gadget engine or another application, and data file 1627. Storage medium 1621 may store, for use by UE 1600, any of a variety of various operating systems or combinations of operating systems.

Storage medium 1621 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1621 may allow UE 1600 to access computer-executable instructions, application programs or the like, stored on transitory or non-transitory memory media, to off-load data, or to upload data. An article of manufacture, such as one utilizing a communication system may be tangibly embodied in storage medium 1621, which may comprise a device readable medium.

In Figure 16, processing circuitry 1601 may be configured to communicate with network 1643b using communication subsystem 1631. Network 1643a and network 1643b may be the same network or networks or different network or networks. Communication subsystem 1631 may be configured to include one or more transceivers used to communicate with network 1643b. For example, communication subsystem 1631 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 1633 and/or receiver 1635 to implement transmitter or receiver functionality, respectively, appropriate to the RAN links (e.g., frequency allocations and the like). Further, transmitter 1633 and receiver 1635 of each transceiver may share circuit components, software or firmware, or alternatively may be implemented separately.

In the illustrated embodiment, the communication functions of communication subsystem 1631 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1631 may include cellular communication, Wi-Fi communication, Bluetooth communication, and GPS communication. Network 1643b may encompass wired and/or wireless networks such as a local-area network (LAN), a wide-area network (WAN), a computer network, a wireless network, a telecommunications network, another like network or any combination thereof. For example, network 1643b may be a cellular network, a Wi-Fi network, and/or a near-field network. Power source 1613 may be configured to provide alternating current (AC) or direct current (DC) power to components of UE 1600.

The features, benefits and/or functions described herein may be implemented in one of the components of UE 1600 or partitioned across multiple components of UE 1600. Further, the features, benefits, and/or functions described herein may be implemented in any combination of hardware, software or firmware. In one example, communication subsystem 1631 may be configured to include any of the components described herein. Further, processing circuitry 1601 may be configured to communicate with any of such components over bus 1602. In another example, any of such components may be represented by program instructions stored in memory that when executed by processing circuitry 1601 perform the corresponding functions described herein. In another example, the functionality of any of such components may be partitioned between processing circuitry 1601 and communication subsystem 1631. In another example, the non-computationally intensive functions of any of such components may be implemented in software or firmware and the computationally intensive functions may be implemented in hardware.

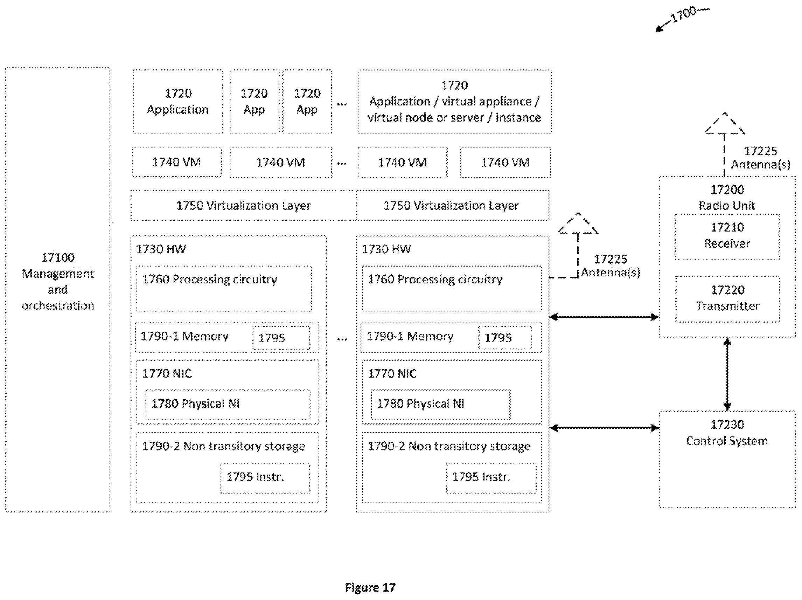

Figure 17 is a schematic block diagram illustrating a virtualization environment 1700 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1700 hosted by one or more of hardware nodes 1730. Further, in embodiments in which the virtual node is not a radio access node or does not require radio connectivity (e.g., a core network node), then the network node may be entirely virtualized.

The functions may be implemented by one or more applications 1720 (which may alternatively be called software instances, virtual appliances, network functions, virtual nodes, virtual network functions, etc.) operative to implement some of the features, functions, and/or benefits of some of the embodiments disclosed herein. Applications 1720 are run in virtualization environment 1700 which provides hardware 1730 comprising processing circuitry 1760 and memory 1790. Memory 1790 contains instructions 1795 executable by processing circuitry 1760 whereby application 1720 is operative to provide one or more of the features, benefits, and/or functions disclosed herein.

Virtualization environment 1700, comprises general-purpose or special-purpose network hardware devices 1730 comprising a set of one or more processors or processing circuitry 1760, which may be commercial off-the-shelf (COTS) processors, dedicated Application Specific Integrated Circuits (ASICs), or any other type of processing circuitry including digital or analog hardware components or special purpose processors. Each hardware device may comprise memory 1790-1 which may be non-persistent memory for temporarily storing instructions 1795 or software executed by processing circuitry 1760. Each hardware device may comprise one or more network interface controllers (NICs) 1770, also known as network interface cards, which include physical network interface 1780. Each hardware device may also include non-transitory, persistent, machine-readable storage media 1790-2 having stored therein software 1795 and/or instructions executable by processing circuitry 1760. Software 1795 may include any type of software including software for instantiating one or more virtualization layers 1750 (also referred to as hypervisors), software to execute virtual machines 1740 as well as software allowing it to execute functions, features and/or benefits described in relation with some embodiments described herein.

Virtual machines 1740, comprise virtual processing, virtual memory, virtual networking or interface and virtual storage, and may be run by a corresponding virtualization layer 1750 or hypervisor. Different embodiments of the instance of virtual appliance 1720 may be implemented on one or more of virtual machines 1740, and the implementations may be made in different ways.

During operation, processing circuitry 1760 executes software 1795 to instantiate the hypervisor or virtualization layer 1750, which may sometimes be referred to as a virtual machine monitor (VMM). Virtualization layer 1750 may present a virtual operating platform that appears like networking hardware to virtual machine 1740.

As shown in Figure 17, hardware 1730 may be a standalone network node with generic or specific components. Hardware 1730 may comprise antenna 17225 and may implement some functions via virtualization. Alternatively, hardware 1730 may be part of a larger cluster of hardware (e.g. such as in a data center or customer premise equipment (CPE)) where many hardware nodes work together and are managed via management and orchestration (MANO) 17100, which, among others, oversees lifecycle management of applications 1720.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1740 may be a software implementation of a physical machine that runs programs as if they were executing on a physical, non-virtualized machine. Each of virtual machines 1740, and that part of hardware 1730 that executes that virtual machine, be it hardware dedicated to that virtual machine and/or hardware shared by that virtual machine with others of the virtual machines 1740, forms a separate virtual network elements (VNE).

Still in the context of NFV, Virtual Network Function (VNF) is responsible for handling specific network functions that run in one or more virtual machines 1740 on top of hardware networking infrastructure 1730 and corresponds to application 1720 in Figure 17.

In some embodiments, one or more radio units 17200 that each include one or more transmitters 17220 and one or more receivers 17210 may be coupled to one or more antennas 17225. Radio units 17200 may communicate directly with hardware nodes 1730 via one or more appropriate network interfaces and may be used in combination with the virtual components to provide a virtual node with radio capabilities, such as a radio access node or a base station.

In some embodiments, some signalling can be effected with the use of control system 17230 which may alternatively be used for communication between the hardware nodes 1730 and radio units 17200.

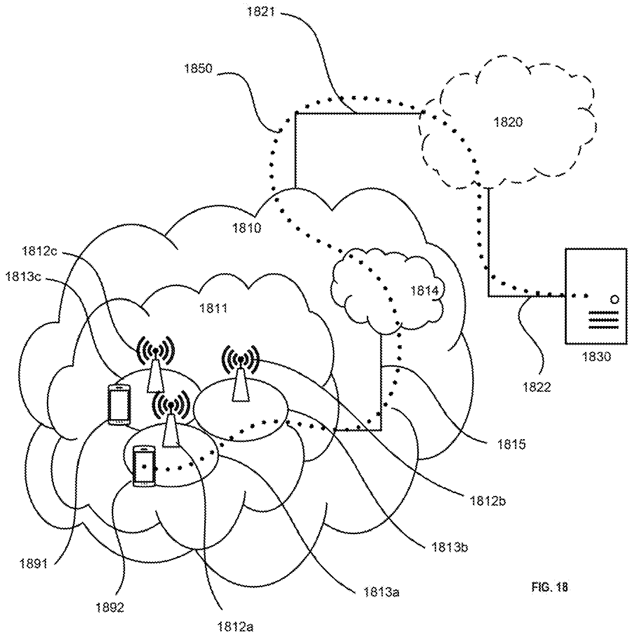

With reference to FIGURE 18, in accordance with an embodiment, a communication system includes telecommunication network 1810, such as a 3GPP-type cellular network, which comprises access network 1811, such as a radio access network, and core network 1814. Access network 1811 comprises a plurality of base stations 1812a, 1812b, 1812c, such as NBs, eNBs, gNBs or other types of wireless access points, each defining a corresponding coverage area 1813a, 1813b, 1813c. Each base station 1812a, 1812b, 1812c is connectable to core network 1814 over a wired or wireless connection 1815. A first UE 1891 located in coverage area 1813c is configured to wirelessly connect to, or be paged by, the corresponding base station 1812c. A second UE 1892 in coverage area 1813a is wirelessly connectable to the corresponding base station 1812a. While a plurality of UEs 1891, 1892 are illustrated in this example, the disclosed embodiments are equally applicable to a situation where a sole UE is in the coverage area or where a sole UE is connecting to the corresponding base station 1812.

Telecommunication network 1810 is itself connected to host computer 1830, which may be embodied in the hardware and/or software of a standalone server, a cloud-implemented server, a distributed server or as processing resources in a server farm. Host computer 1830 may be under the ownership or control of a service provider, or may be operated by the service provider or on behalf of the service provider. Connections 1821 and 1822 between telecommunication network 1810 and host computer 1830 may extend directly from core network 1814 to host computer 1830 or may go via an optional intermediate network 1820. Intermediate network 1820 may be one of, or a combination of more than one of, a public, private or hosted network; intermediate network 1820, if any, may be a backbone network or the Internet; in particular, intermediate network 1820 may comprise two or more sub-networks (not shown).

The communication system of Figure 18 as a whole enables connectivity between the connected UEs 1891, 1892 and host computer 1830. The connectivity may be described as an over-the-top (OTT) connection 1850. Host computer 1830 and the connected UEs 1891, 1892 are configured to communicate data and/or signaling via OTT connection 1850, using access network 1811, core network 1814, any intermediate network 1820 and possible further infrastructure (not shown) as intermediaries. OTT connection 1850 may be transparent in the sense that the participating communication devices through which OTT connection 1850 passes are unaware of routing of uplink and downlink communications. For example, base station 1812 may not or need not be informed about the past routing of an incoming downlink communication with data originating from host computer 1830 to be forwarded (e.g., handed over) to a connected UE 1891. Similarly, base station 1812 need not be aware of the future routing of an outgoing uplink communication originating from the UE 1891 towards the host computer 1830.

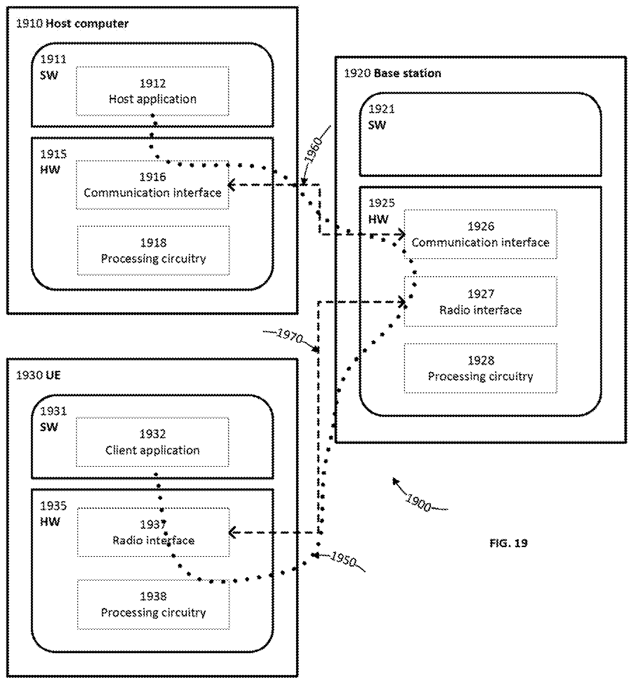

Example implementations, in accordance with an embodiment, of the UE, base station and host computer discussed in the preceding paragraphs will now be described with reference to Figure 19. In communication system 1900, host computer 1910 comprises hardware 1915 including communication interface 1916 configured to set up and maintain a wired or wireless connection with an interface of a different communication device of communication system 1900. Host computer 1910 further comprises processing circuitry 1918, which may have storage and/or processing capabilities. In particular, processing circuitry 1918 may comprise one or more programmable processors, application-specific integrated circuits, field programmable gate arrays or combinations of these (not shown) adapted to execute instructions. Host computer 1910 further comprises software 1911, which is stored in or accessible by host computer 1910 and executable by processing circuitry 1918. Software 1911 includes host application 1912. Host application 1912 may be operable to provide a service to a remote user, such as UE 1930 connecting via OTT connection 1950 terminating at UE 1930 and host computer 1910. In providing the service to the remote user, host application 1912 may provide user data which is transmitted using OTT connection 1950.

Communication system 1900 further includes base station 1920 provided in a telecommunication system and comprising hardware 1925 enabling it to communicate with host computer 1910 and with UE 1930. Hardware 1925 may include communication interface 1926 for setting up and maintaining a wired or wireless connection with an interface of a different communication device of communication system 1900, as well as radio interface 1927 for setting up and maintaining at least wireless connection 1970 with UE 1930 located in a coverage area (not shown in Figure 19) served by base station 1920. Communication interface 1926 may be configured to facilitate connection 1960 to host computer 1910. Connection 1960 may be direct or it may pass through a core network (not shown in Figure 19) of the telecommunication system and/or through one or more intermediate networks outside the telecommunication system. In the embodiment shown, hardware 1925 of base station 1920 further includes processing circuitry 1928, which may comprise one or more programmable processors, application-specific integrated circuits, field programmable gate arrays or combinations of these (not shown) adapted to execute instructions. Base station 1920 further has software 1921 stored internally or accessible via an external connection.

Communication system 1900 further includes UE 1930 already referred to. Its hardware 1935 may include radio interface 1937 configured to set up and maintain wireless connection 1970 with a base station serving a coverage area in which UE 1930 is currently located. Hardware 1935 of UE 1930 further includes processing circuitry 1938, which may comprise one or more programmable processors, application-specific integrated circuits, field programmable gate arrays or combinations of these (not shown) adapted to execute instructions. UE 1930 further comprises software 1931, which is stored in or accessible by UE 1930 and executable by processing circuitry 1938. Software 1931 includes client application 1932. Client application 1932 may be operable to provide a service to a human or non-human user via UE 1930, with the support of host computer 1910. In host computer 1910, an executing host application 1912 may communicate with the executing client application 1932 via OTT connection 1950 terminating at UE 1930 and host computer 1910. In providing the service to the user, client application 1932 may receive request data from host application 1912 and provide user data in response to the request data. OTT connection 1950 may transfer both the request data and the user data. Client application 1932 may interact with the user to generate the user data that it provides.

It is noted that host computer 1910, base station 1920 and UE 1930 illustrated in Figure 19 may be similar or identical to host computer 1830, one of base stations 1812a, 1812b, 1812c and one of UEs 1891, 1892 of Figure 18, respectively. This is to say, the inner workings of these entities may be as shown in Figure 19 and independently, the surrounding network topology may be that of Figure 18.

In Figure 19, OTT connection 1950 has been drawn abstractly to illustrate the communication between host computer 1910 and UE 1930 via base station 1920, without explicit reference to any intermediary devices and the precise routing of messages via these devices. Network infrastructure may determine the routing, which it may be configured to hide from UE 1930 or from the service provider operating host computer 1910, or both. While OTT connection 1950 is active, the network infrastructure may further take decisions by which it dynamically changes the routing (e.g., on the basis of load balancing consideration or reconfiguration of the network).

Wireless connection 1970 between UE 1930 and base station 1920 is in accordance with the teachings of the embodiments described throughout this disclosure. One or more of the various embodiments improve the performance of OTT services provided to UE 1930 using OTT connection 1950, in which wireless connection 1970 forms the last segment. More precisely, the teachings of these embodiments may improve the latency and reliability and thereby provide benefits such as reduced user waiting time, relaxed restriction on file size, better responsiveness, etc.

A measurement procedure may be provided for the purpose of monitoring data rate, latency and other factors on which the one or more embodiments improve. There may further be an optional network functionality for reconfiguring OTT connection 1950 between host computer 1910 and UE 1930, in response to variations in the measurement results. The measurement procedure and/or the network functionality for reconfiguring OTT connection 1950 may be implemented in software 1911 and hardware 1915 of host computer 1910 or in software 1931 and hardware 1935 of UE 1930, or both. In embodiments, sensors (not shown) may be deployed in or in association with communication devices through which OTT connection 1950 passes; the sensors may participate in the measurement procedure by supplying values of the monitored quantities exemplified above, or supplying values of other physical quantities from which software 1911, 1931 may compute or estimate the monitored quantities. The reconfiguring of OTT connection 1950 may include message format, retransmission settings, preferred routing etc.; the reconfiguring need not affect base station 1920, and it may be unknown or imperceptible to base station 1920. Such procedures and functionalities may be known and practiced in the art. In certain embodiments, measurements may involve proprietary UE signaling facilitating host computer 1910's measurements of throughput, propagation times, latency and the like. The measurements may be implemented in that software 1911 and 1931 causes messages to be transmitted, in particular empty or 'dummy' messages, using OTT connection 1950 while it monitors propagation times, errors etc.

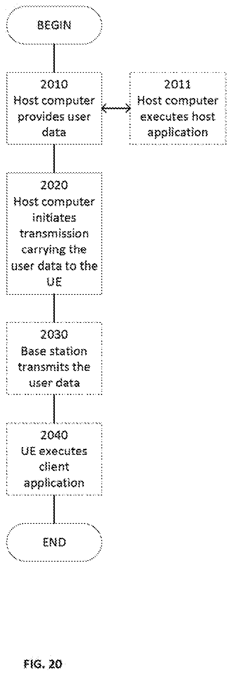

Figure 20 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 20 will be included in this section. In step 2010, the host computer provides user data. In substep 2011 (which may be optional) of step 2010, the host computer provides the user data by executing a host application. In step 2020, the host computer initiates a transmission carrying the user data to the UE. In step 2030 (which may be optional), the base station transmits to the UE the user data which was carried in the transmission that the host computer initiated, in accordance with the teachings of the embodiments described throughout this disclosure. In step 2040 (which may also be optional), the UE executes a client application associated with the host application executed by the host computer.

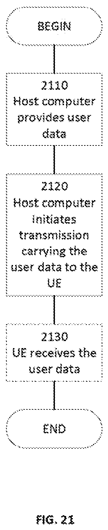

Figure 21 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 21 will be included in this section. In step 2110 of the method, the host computer provides user data. In an optional substep (not shown) the host computer provides the user data by executing a host application. In step 2120, the host computer initiates a transmission carrying the user data to the UE. The transmission may pass via the base station, in accordance with the teachings of the embodiments described throughout this disclosure. In step 2130 (which may be optional), the UE receives the user data carried in the transmission.

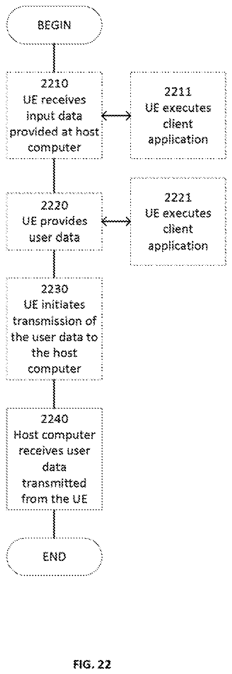

Figure 22 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 22 will be included in this section. In step 2210 (which may be optional), the UE receives input data provided by the host computer. Additionally or alternatively, in step 2220, the UE provides user data. In substep 2221 (which may be optional) of step 2220, the UE provides the user data by executing a client application. In substep 2211 (which may be optional) of step 2210, the UE executes a client application which provides the user data in reaction to the received input data provided by the host computer. In providing the user data, the executed client application may further consider user input received from the user. Regardless of the specific manner in which the user data was provided, the UE initiates, in substep 2230 (which may be optional), transmission of the user data to the host computer. In step 2240 of the method, the host computer receives the user data transmitted from the UE, in accordance with the teachings of the embodiments described throughout this disclosure.

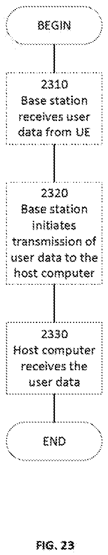

Figure 23 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 23 will be included in this section. In step 2310 (which may be optional), in accordance with the teachings of the embodiments described throughout this disclosure, the base station receives user data from the UE. In step 2320 (which may be optional), the base station initiates transmission of the received user data to the host computer. In step 2330 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

Performing truncation of original codebook based on observation of radiation patterns of precoders, i.e. excluding some of the precoders from codebook.

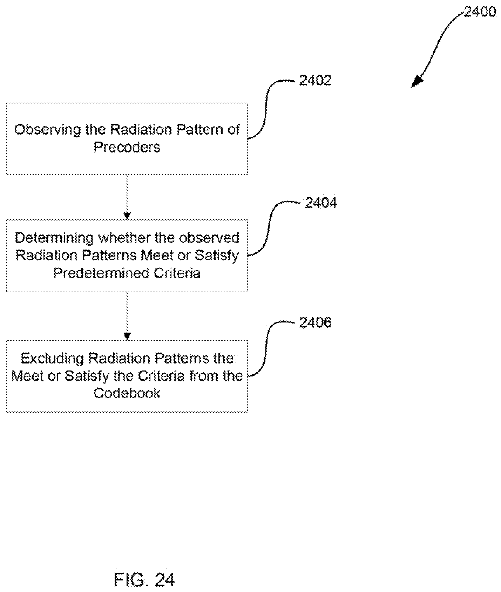

Figure 24 depicts a method in accordance with particular embodiments, the method begins at step 2402 with observing the radiation pattern of precoders at step 2402. At step 2404, there is a determination of whether the observed radiation patterns meet or satisfy some criteria. At step 2406, the precoders that have observed radiation patterns that meet the criteria are excluded from the codebook.

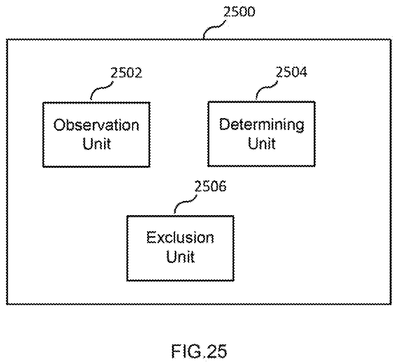

Figure 25 illustrates a schematic block diagram of an apparatus 2500 in a wireless network (for example, the wireless network shown in Figure 15). The apparatus may be implemented in a wireless device or network node (e.g., wireless device 1510 or network node 1560 shown in Figure 15). Apparatus 2500 is operable to carry out the example method described with reference to Figure 24 and possibly any other processes or methods disclosed herein. It is also to be understood that the method of Figure 24 is not necessarily carried out solely by apparatus 2500. At least some operations of the method can be performed by one or more other entities.

Virtual Apparatus 2500 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause observation unit 2502, determining unit 2504 and exclusion unit 2506, and any other suitable units of apparatus 2500 to perform corresponding functions according one or more embodiments of the present disclosure.

As illustrated in Figure 25, apparatus 2500 includes observation unit 2502 configured to observe the radiation pattern of precoders, a determining unit 2504 configured to determine whether the observed radiation patterns meet or satisfy some criteria, and an exclusion unit 2506 configured to excluded from the codebook the precoders that have observed radiation patterns that meet the criteria.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

## ABBREVIATIONS

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| GoB | Grid-of-beams |
| DFT | Discrete Fourier transform |
| AAS | Advanced antenna systems |
| FDD | Frequency-division duplex |
| AF | Array factor |
| EF | Element factor |
| FF | Far field |
| 1x RTT | CDMA2000 1x Radio Transmission Technology |
| 3GPP | 3rd Generation Partnership Project |
| 5G | 5th Generation |
| ABS | Almost Blank Subframe |
| ARQ | Automatic Repeat Request |
| AWGN | Additive White Gaussian Noise |
| BCCH | Broadcast Control Channel |
| BCH | Broadcast Channel |
| CA | Carrier Aggregation |
| CC | Carrier Component |
| CCCH | SDU Common Control Channel SDU |
| CDMA | Code Division Multiplexing Access |
| CGI | Cell Global Identifier |
| CIR | Channel Impulse Response |
| CP | Cyclic Prefix |
| CPICH | Common Pilot Channel |
| CPICH Ec/No | CPICH Received energy per chip divided by the power density in the band |
| CQI | Channel Quality information |
| C-RNTI | Cell RNTI |
| CSI | Channel State Information |
| DCCH | Dedicated Control Channel |
| DL | Downlink |

| | |
|---|---|
| DM | Demodulation |
| DMRS | Demodulation Reference Signal |
| DRX | Discontinuous Reception |
| DTX | Discontinuous Transmission |
| DTCH | Dedicated Traffic Channel |
| DUT | Device Under Test |
| E-CID | Enhanced Cell-ID (positioning method) |
| E-SMLC | Evolved-Serving Mobile Location Centre |
| ECGI | Evolved CGI |
| eNB | E-UTRAN NodeB |
| ePDCCH | enhanced Physical Downlink Control Channel |
| E-SMLC | evolved Serving Mobile Location Center |
| E-UTRA | Evolved UTRA |
| E-UTRAN | Evolved UTRAN |
| FDD | Frequency Division Duplex |
| FFS | For Further Study |
| GERAN | GSM EDGE Radio Access Network |
| gNB | Base station in NR |
| GNSS | Global Navigation Satellite System |
| GSM | Global System for Mobile communication |
| HARQ | Hybrid Automatic Repeat Request |
| HO | Handover |
| HSPA | High Speed Packet Access |
| HRPD | High Rate Packet Data |
| LOS | Line of Sight |
| LPP | LTE Positioning Protocol |
| LTE | Long-Term Evolution |
| MAC | Medium Access Control |
| MBMS | Multimedia Broadcast Multicast Services |

| MBSFN | Multimedia Broadcast multicast service Single Frequency Network |
| --- | --- |
| MBSFN ABS | MBSFN Almost Blank Subframe |
| MDT | Minimization of Drive Tests |
| MIB | Master Information Block |
| MME | Mobility Management Entity |
| MSC | Mobile Switching Center |
| NPDCCH | Narrowband Physical Downlink Control Channel |
| NR | New Radio |
| OCNG | OFDMA Channel Noise Generator |
| OFDM | Orthogonal Frequency Division Multiplexing |
| OFDMA | Orthogonal Frequency Division Multiple Access |
| OSS | Operations Support System |
| OTDOA | Observed Time Difference of Arrival |
| O&M | Operation and Maintenance |
| PBCH | Physical Broadcast Channel |
| P-CCPCH | Primary Common Control Physical Channel |
| PCell | Primary Cell |
| PCFICH | Physical Control Format Indicator Channel |
| PDCCH | Physical Downlink Control Channel |
| PDCP | Packet Data Convergence Protocol |
| PDP | Profile Delay Profile |
| PDSCH | Physical Downlink Shared Channel |
| PGW | Packet Gateway |
| PHICH | Physical Hybrid-ARQ Indicator Channel |
| PLMN | Public Land Mobile Network |
| PMI | Precoder Matrix Indicator |
| PRACH | Physical Random Access Channel |
| PRS | Positioning Reference Signal |
| PSS | Primary Synchronization Signal |

| PUCCH | Physical Uplink Control Channel |
|---|---|
| PUSCH | Physical Uplink Shared Channel |
| RACH | Random Access Channel |
| QAM | Quadrature Amplitude Modulation |
| RAN | Radio Access Network |
| RAT | Radio Access Technology |
| RLC | Radio Link Control |
| RLM | Radio Link Management |
| RNC | Radio Network Controller |
| RNTI | Radio Network Temporary Identifier |
| RRC | Radio Resource Control |
| RRM | Radio Resource Management |
| RS | Reference Signal |
| RSCP | Received Signal Code Power |
| RSRP | Reference Symbol Received Power OR Reference Signal Received Power |
| RSRQ | Reference Signal Received Quality OR Reference Symbol Received Quality |
| RSSI | Received Signal Strength Indicator |
| RSTD | Reference Signal Time Difference |
| SCH | Synchronization Channel |
| SCell | Secondary Cell |
| SDAP | Service Data Adaptation Protocol |
| SDU | Service Data Unit |
| SFN | System Frame Number |
| SGW | Serving Gateway |
| SI | System Information |
| SIB | System Information Block |
| SNR | Signal to Noise Ratio |
| SON | Self Optimized Network |
| SS | Synchronization Signal |

| SSS | Secondary Synchronization Signal |
| TDD | Time Division Duplex |
| TDOA | Time Difference of Arrival |
| TSS | Tertiary Synchronization Signal |
| TTI | Transmission Time Interval |
| UE | User Equipment |
| UL | Uplink |
| UMTS | Universal Mobile Telecommunication System |
| USIM | Universal Subscriber Identity Module |
| UTDOA | Uplink Time Difference of Arrival |
| UTRA | Universal Terrestrial Radio Access |
| UTRAN | Universal Terrestrial Radio Access Network |
| WCDMA | Wide CDMA |
| WLAN | Wide Local Area Network |

## Claims

1. A method performed by a radio node for downlink precoder codebook modification, the precoder codebook having a plurality of beamformers, the method comprising:

   determining (52) a radiation pattern for each beamformer of the plurality of beamformers, the radiation pattern for each of the plurality of beamformers including a main lobe and at least two sidelobes;
   determining (54) by array far-field analysis whether the determined radiation pattern for each beamformer of the plurality of beamformers satisfies a design criterion;
   **characterized in that** the method further comprises:

   updating the codebook by excluding (56) from the codebook the beamformers from the plurality of beamformers that have radiation patterns that are determined to satisfy the design criterion,
   wherein the design criterion includes the ratio of the gain by the at least two sidelobes to the gain of the main lobe, wherein the at least two sidelobes gain is higher than the main lobe gain.

2. A radio node comprising:

   one or more processors; and
   memory storing instructions that, when executed by the one or more processors, cause the radio node to:
   perform the method set out in claim 1.

3. A non-transitory computer readable medium comprising instructions that, when executed by one or more processors, cause the one or more processors to:
   perform the method set out in claim 1.

## Patentansprüche

1. Verfahren, das von einem Funkknoten durchgeführt wird, zur Precoder-Codebuch-Modifikation im Downlink, wobei das Precoder-Codebuch eine Vielzahl von Strahlformern aufweist, wobei das Verfahren Folgendes umfasst:

Bestimmen (52) eines Strahlungsmusters für jeden Strahlformer der Vielzahl von Strahlformern, wobei das Strahlungsmuster für jeden der Vielzahl von Strahlformern eine Hauptkeule und mindestens zwei Nebenkeulen beinhaltet;

Bestimmen (54) durch Array-Fernfeld-Analyse, ob das bestimmte Strahlungsmuster für jeden Strahlformer der Vielzahl von Strahlformern ein Ausgestaltungskriterium erfüllt;

**dadurch gekennzeichnet, dass** das Verfahren ferner Folgendes umfasst:

Aktualisieren des Codebuchs durch Ausschließen (56) der Strahlformer der Vielzahl von Strahlformern aus dem Codebuch, die Strahlungsmuster aufweisen, die der Bestimmung nach das Ausgestaltungskriterium erfüllen,

wobei das Ausgestaltungskriterium das Verhältnis der Verstärkung durch die mindestens zwei Nebenkeulen zu der Verstärkung der Hauptkeule beinhaltet, wobei die Verstärkung der mindestens zwei Nebenkeulen höher als die Verstärkung der Hauptkeule ist.

2. Funkknoten, umfassend:

einen oder mehrere Prozessoren; und

einen Speicher, auf dem Anweisungen gespeichert sind, die bei Ausführung durch den einen oder die mehreren Prozessoren den Funkknoten zu Folgendem veranlassen:

Durchführen des Verfahrens nach Anspruch 1.

3. Nichttransitorisches computerlesbares Medium, umfassend Anweisungen, die bei Ausführung durch einen oder mehrere Prozessoren den einen oder die mehreren Prozessoren zu Folgendem veranlassen:

Durchführen des Verfahrens nach Anspruch 1.

**Revendications**

1. Procédé réalisé par un nœud radio pour la modification de livre de codes de précodeur de liaison descendante, le livre de codes de précodeur comportant une pluralité de formateurs de faisceau, le procédé comprenant :

la détermination (52) d'un diagramme de rayonnement pour chaque formateur de faisceau de la pluralité de formateurs de faisceau, le diagramme de rayonnement pour chacun de la pluralité de formateurs de faisceau comprenant un lobe principal et au moins deux lobes secondaires ;

la détermination (54) par analyse de champ lointain de réseau si le diagramme de rayonnement déterminé pour chaque formateur de faisceau de la pluralité de formateurs de faisceau satisfait un critère de conception ;

**caractérisé en ce que** le procédé comprend en outre :

la mise à jour du livre de codes en excluant (56) du livre de codes les formateurs de faisceau de la pluralité de formateurs de faisceau qui ont des diagrammes de rayonnement qui sont déterminés comme satisfaisant au critère de conception,

dans lequel le critère de conception comprend le rapport du gain des au moins deux lobes secondaires par rapport au gain du lobe principal, dans lequel le gain des au moins deux lobes secondaires est supérieur au gain du lobe principal.

2. Nœud radio comprenant :

un ou plusieurs processeurs ; et

une mémoire stockant des instructions qui, lorsqu'elles sont exécutées par les un ou plusieurs processeurs, amènent le nœud radio à :

réaliser le procédé selon la revendication 1.

3. Support lisible par ordinateur non transitoire comprenant des instructions qui, lorsqu'elles sont exécutées par un ou plusieurs processeurs, amènent les un ou plusieurs processeurs à :

réaliser le procédé selon la revendication 1.

50

Determine Radiation Pattern for
Each Beamformer in Codebook
52

Determine Ratio between Power of
Main Lobe and Side Lobes if They
Satisfy Predefined Threshold, and if
They Create Excessive Interference
54

No → Discard Beamformer from
the Codebook Set
56

Yes

Keep Beamformer in the Codebook
Set
58

Update the Beamformer Set
in the Codebook
60

FIG.1

FIG.3

FIG.2

FIG.4

FIG.5

FIG.7

FIG.6

FIG.9

FIG.8

FIG.11

FIG.10

FIG.12

FIG.14

FIG.13

Figure 15

Figure 16

EP 3 900 209 B1

1700

| | |
|---|---|
| 1720 Application | 1720 App |
| 1720 App | 1720 Application / virtual appliance / virtual node or server / instance |

1740 VM   1740 VM   ...   1740 VM   1740 VM

1750 Virtualization Layer     1750 Virtualization Layer

**17100 Management and orchestration**

**1730 HW**

1760 Processing circuitry

1790-1 Memory     1795

1770 NIC

1780 Physical NI

1790-2 Non transitory storage

1795 Instr.

**1730 HW**

1760 Processing circuitry

1790-1 Memory     1795

1770 NIC

1780 Physical NI

1790-2 Non transitory storage

1795 Instr.

17225 Antenna(s)

17225 Antenna(s)

**17200 Radio Unit**

17210 Receiver

17220 Transmitter

**17230 Control System**

Figure 17

FIG. 18

EP 3 900 209 B1

FIG. 19

35

BEGIN

2010
Host computer
provides user
data

2011
Host computer
executes host
application

2020
Host computer
initiates
transmission
carrying the
user data to the
UE

2030
Base station
transmits the
user data

2040
UE executes
client
application

END

FIG. 20

36

FIG. 21

BEGIN

2210
UE receives
input data
provided at host
computer

2211
UE executes
client
application

2220
UE provides
user data

2221
UE executes
client
application

2230
UE initiates
transmission of
the user data to
the host
computer

2240
Host computer
receives user
data
transmitted
from the UE

END

FIG. 22

BEGIN

2310
Base station
receives user
data from UE

2320
Base station
initiates
transmission of
user data to the
host computer

2330
Host computer
receives the
user data

END

FIG. 23

2400

┌─────────────────────────────────┐
│                                 │  2402
│ Observing the Radiation Pattern of │
│           Precoders             │
└─────────────────────────────────┘
                │
                ▼
┌─────────────────────────────────┐
│                                 │  2404
│ Determining whether the observed │
│ Radiation Patterns Meet or Satisfy │
│      Predetermined Criteria      │
└─────────────────────────────────┘
                │
                ▼
┌─────────────────────────────────┐
│                                 │  2406
│  Excluding Radiation Patterns the │
│ Meet or Satisfy the Criteria from the │
│           Codebook              │
└─────────────────────────────────┘

FIG. 24

2500

2502

2504

Observation
Unit

Determining
Unit

2506

Exclusion
Unit

FIG.25

**REFERENCES CITED IN THE DESCRIPTION**

**Patent documents cited in the description**

- WO 2016189498 A1

- US 2017310376 A1

**Non-patent literature cited in the description**

- Performance of FD-MIMO codebook enhancements. *3GPP draft, R1-151753*